# EUROPÄISCHE PATENTSCHRIFT

(11) **EP 0 907 675 B1**
(45) Veröffentlichungstag und Bekanntmachung des Hinweises auf die Patenterteilung: **13.11.2002**
(21) Anmeldenummer: 97929180.4
(22) Anmeldetag: 13.06.1997
(51) Int. Cl.: C08J 7/04, C08J 5/18

(54) **HOLZBESCHICHTUNGSFOLIE**
PROTECTIVE FILM FOR TIMBER
FILM DE REVETEMENT DE BOIS

(30) Priorität: 27.06.1996 DE 19625753
(43) Veröffentlichungstag der Anmeldung: 14.04.1999
(73) Patentinhaber: BASF Coatings AG, 48165 Münster (DE)
(72) Erfinder: KIRIAZIS, Leonidas, D-48151 Münster (DE); KUNZE, Peter, Eduard, D-48137 Drensteinfurt (DE)
(74) Vertreter: Fitzner, Uwe, Dr.
(86) Internationale Anmeldenummer: EP9703085
(87) Internationale Veröffentlichungsnummer: WO98000458

(56) Entgegenhaltungen:
- EP-A- 0 319 155
- EP-A- 0 361 351
- DE-A- 4 022 741
- US-A- 5 429 590

## Beschreibung

Die vorliegende Erfindung betrifft eine Folie, die aus wenigstens zwei Schichten besteht und die sich insbesondere für die Beschichtung von Holz, Haushaltsgeräten, Möbeln und Möbelteilen eignet.

Unpigmentierte Holzbeschichtungen werden zur Zeit durch eine aufwendige Mehrfachapplikation, z.B. durch zwei- bis dreimaliges Spritzen, mit entsprechend problematischen Umweltaspekten erstellt. Als Alternative wird die PVC-Ummantelungstechnik bzw. die Papier-Folien-Umwantelungstechnik eingesetzt.

Aus dem Stand der Technik ist ferner bekannt, Polyurethan-Elastomere mit Lacken, z.B. solchen auf Polyurethanbasis, zu überschichten. Dies bedingt jedoch einen zusätzlichen Arbeitsgang, nach dem Kaschierschritt. Abgesehen davon genügen derartige Beschichtungen noch nicht dem Anforderungsprofil, das für Holzbeschichtungen zu fordern ist.

Aus der EP-A-287911 sind Schichtstoffe aus fünf oder sechs Komponenten sowie ihre Verwendung zur Herstellung von Skiern, Surfbrettern und Möbelbauteilen bekannt. Im einzelnen bestehen die Schichten aus einer Folie aus hoch transparentem, thermoplastischem Kunststoff, einer bei Raumtemperatur klebfreien Polyurethanschicht, einer Farbschicht, einer Epoxidharzschicht und einem Träger- und Kernmaterial aus Polyurethanhartschaum, Holz oder Aluminium.

Aus der FR-A-2660251 ist ebenfalls ein für Skier verwendbares Mehrschichtsystem bekannt. Unter anderem wird dort ein Dreischichtsystem, bestehend aus Polycarbonat, Polyamid und thermoplastischem Polyurethan beschrieben.

Aus der DE 40 22 741 sind Foliensysteme bekannt, bei denen Folien mit Härten von 60 bis 98 Shore-A, bzw. 50 bis 74 Shore-D verwendet werden. Die Härtegrade sind dabei verteilt, d.h. eine Folie hat einen Shore-A-Härte, die andere eine Shore-D-Härte. Darüber hinaus sind die Folien nicht zur Beschichtung von Holz geeignet, sondern lediglich zur Unterschäumung mit Polyurethanschäumen.

Aus der EP 0 319 155 sind Folien bekannt, die Shore-A-Härten von 60 bis 95 aufweisen. Diese Folien sind jedoch ebenfalls nicht zur Beschichtung von Holz geeignet und bestehen aus einer mit eine Schaummembrane beschichteten Polymerfolie.

Die EP 0 361 351 beschreibt Polymerfolien, die mit einem Lack und auf der gegenüberliegenden Seite mit einem Adhesiv beschichtet sind. Diese Folien werden zur Beschichtung von Automobilteilen eingesetzt. Eine Angabe zur Härte der Folien, sowie eine nähere Beschreibung der einzelnen Komponenten findet sich in der EP 0 361 351 jedoch nicht.

Nachteil des Standes der Technik ist, daß die bisher verwendeten nicht dem Anforderungsprofil für Holzbeschichtungen entsprechen. Dies gilt insbesondere hinsichtlich der Kratzfestigkeit und Schleifbarkeit.

Aufgabe der vorliegenden Erfindung war es demgemäß, eine Folie zu entwickeln, die sich für die Holzbeschichtung eignet und das hierfür notwendige Anforderungsprofil aufweist.

Diese Aufgabe wird dadurch gelöst, daß sie 1) wenigstens eine Folie aus Polyurethan mit einer Shore-A-Härte von 70 bis Shore-D-Härte von 80, vorzugsweise Shore-A-Härte von 80 bis Shore-D-Härte von 74, insbesondere mit einer Shore-D-Härte von 45 bis 74 enthält, und 2) wenigstens einer darauf aufgebrachten Schicht aus mittels ultravioletter Strahlung härtbarem Lack enthält.

Die erfindungsgemäß eingesetzten thermoplastischen Polyurethane können beispielsweise hergestellt werden nach dem Band- oder dem Extruderverfahren durch Umsetzung von
a) organischen, vorzugsweise aliphatischen, cycloaliphatischen oder insbesondere aromatischen Diisocyanaten,
b) Polyhydroxylverbindungen mit Molekulargewichten von 500 bis 8000 und
c) Kettenverlängerungsmitteln mit Molekulargewichten von 60 bis 400 in Gegenwart von gegebenenfalls
d) Katalysatoren,
e) Hilfsmitteln und/oder Zusatzstoffen.

Die hierfür verwendbaren Ausgangsstoffe (a) bis (c), Katalysatoren (d), Hilfsmittel und Zusatzstoffe (e) werden im folgenden näher beschrieben:
a) Als organische Diisoxyanate (a) kommen vorzugsweise aliphatische, cycloaliphatische und insbesondere aromatische Diisocyanate in Betracht. Im einzelnen seien beispielhaft genannt: aliphatische Diisocyanate, wie Hexamethylendiisocyanat-1,6, Methylpentamethylen-diisocyanat-1,5, 2-Ethyl-butylen-diisocyanat-1,4 oder Mischungen aus mindestens 2 der genannten C₆-Alkylen-diisocyanate, Pentamethylen-diisocyanat-1,5 und Butylen-diisocyanat-1,4, cycloaliphatische Diisocyanate, wie Isophoron-diisocyanat, 1,4-Cyclohexan-diisocyanat. 1-Methyl-2,4- und -2,6-cyclohexan-diisocyanat sowie die entsprechenden Isomerengemische, 2,4'-, 2,4'- und 2,2'-Dicyclohexylmethan-diisocyanat sowie die entsprechenden Isomerengemische und vorzugsweise aromatische Diisocyanate, wie 2,4-Toluylen-diisocyanat, Gemische aus 2,4- und 2,6-Toluylen-diisocyanat 4,4'-, 2,4'- und 2,2-Diphenylmethan-diisocyanat, Gemische aus 2,4'- und 4,4'-Diphenylmethan-diisocyanat, urethanmodifiziertes flüssiges 4,4'- und/oder 2,4'- 4,4'Diisocyanatodiphenylethan-(1,2) und 1,5-Naphtylen-diisocyanat. Vorzugsweise verwendet werden Hexamethylen-diisocyanat-1,6, 4.4'-Dicyclohexylmethan-diisocyanat, Isophoron-diisocyanat, Diphenylmethan-diisocyanat-Isomerengemische mit einem 4,4'-Diphenylmethan-diisocyanatgehalt von größer als 96 Gew.-% und insbesondere 4,4'-Diphenylmethan-diisocyanat.
b) Als höhermolekulare Polyhydroxylverbindungen (b) mit Molekulargewichten von 500 bis 8000 eignen sich vorzugsweise Polyetherole und Polyesterole. In Betracht kommen jedoch auch hydroxylgruppenhaltige Polymere, beispielsweise Polyacetale, wie Polyoxymethylene und vor allem wasserunlösliche Formale, z.B. Polybutandiolformal und Polyhexandiolformal, und aliphatische Polycarbonate, insbesondere solche, aus Diphenylcarbonat und Hexandiol-1,6, hergestellt durch Umesterung, mit den oben genannten Molekulargewichten. Die Polyhydroxylverbindungen müssen zumindest überwiegend linerar, d.h. im Sinne der Isocyanatreaktion difunktionell aufgebaut sein. Die genannten Polyhydroxylverbindungen können als Einzelkomponenten oder in Form von Mischungen zur Anwendung kommen.
   Geeignete Polyetherole können hergestellt werden nach bekannten Verfahren, beispielsweise durch anionische Polymerisation mit Alkalihydroxiden, wie Natrium- oder Kaliumhydroxid, oder Alkalialkoholaten, wie Natriummethylat, Natrium- oder Kaliummethylat oder Kaliumisopropylat als Katalysatoren oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest und gegebenenfalls einem Startermolekühl, das 2 reaktive Wasserstoffatome gebunden enthält.
   Als Alkylenoxide seien z.B. genannt: Ethylenoxid 1,2-Propylenoxid, Tetrahydrofuran, 1,2- und 2,3 Butylenoxid. Vorzugsweise Anwendung finden Ethylenoxid und Mischungen aus Propylenoxid-1,2 und Ethylenoxid. Die Alkylenoxide können einzeln, alternierend nacheinander oder als Mischung verwendet werden. Als Startermolekül kommen beispielsweise in Betracht: Wasser, Aminoalkohole, wie N-Alkyldialkanolamine, beispielsweise N-Methyldiethanolamin und Diole, z.B. Alkandiole oder Dialkylenglykole mit 2 bis 12 C-Atomen, vorzugsweise 2 bis 6 C-Atomen, wie Ethandiol, Propandiol-1,3, Butandiol-1,4 und Hexandiol-1,6. Gegebenenfalls können auch Mischungen von Startermolekülen eingesetzt werden. Geeignete Polyetherole sind ferner die hydroxylgruppenhaltigen Polymerisationsprodukte des Tetrahydrofurans (Polyoxytetramethylenglykole).
   Vorzugsweise verwendet werden Polyetherole aus Propylenoxid-1,2 und Ethylenoxid, in denen mehr als 50 %, vorzugsweise 60 bis 80 % der OH-Gruppen primäre Hydroxylgruppen sind und bei denen zumindest ein Teil des Ethylenoxids als endständiger Block angeordnet ist und insbesondere Polyoxytetramethylenglykole.
   Solche Polyetherole können erhalten werden, indem man z.B. an das Startermolekül zunächst das Propylenoxid-1,2 und daran anschließend das Ethylenoxid polymerisiert oder zunächst das gesamte Propylenoxid-1,2 im Gemisch mit einem Teil des Ethylenoxids copolymerisiert und den Rest des Ethylenoxids anschließend anpolymerisiert oder schrittweise zunächst einen Teil des Ethylenoxids, dann das gesamte Propylenoxid-1,2 und dann den Rest des Ethylenoxids an das Startermolekül anpolymerisiert.
   Die im wesentlichen linearen Polyetherole besitzen Molekulargewichte von 500 bis 8.000, vorzugsweise 600 bis 6.000 und insbesondere 800 bis 3.500. Sie können sowohl einzeln als auch in Form von Mischungen untereinander zur Anwendung kommen.
   Geeignete Polyesterole können beispielsweise aus Dicarbonsäuren mit 2 bis 12 Kohlenstoffatomen, vorzugsweise 4 bis 8 Kohlenstoffatomen, und mehrwertigen Alkoholen hergestellt werden. Als Dicarbonsäuren kommen beispielsweise in Betracht: aliphatische Dicarbonsäuren, wie Bernsteinsäure, Glutarsäure, Korksäure, Azelainsäure, Sebacinsäure und vorzugsweise Adipinsäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden.
   Desgleichen sind Mischungen aus aromatischen und aliphatischen Dicarbonsäuren einsetzbar. Zur Herstellung der Polyesterole kann es gegebenenfalls vorteilhaft sein, anstelle der Dicarbonsäuren die entsprechenden Dicarbonsäurederivate, wie Dicarbonsäureester mit 1 bis 4 Kohlenstoffatomen im Alkoholrest, Dicarbonsäureanhydride oder Dicarbonsäurechloride zu verwenden. Beispiele für mehrwertige Alkohole sind Alkandiole mit 2 bis 10, vorzugsweise 2 bis 6 Kohlenstoffatomen, wie Ethandiol, Propandiol-1,3, Butandiol-1,4, Pentandiol-1,5, Hexandiol-1,6, Decandiol-1,10, 2,2-Dimenthylpropandiol-1,3, Propandiol-1,2 und Dialkylenether-glykole wie Diethylenglykol und Dipropylenglykol. Je nach den gewünschten Eigenschaften können die mehrwertigen Alkohole allein oder gegebenenfalls in Mischungen untereinander verwendet werden.
   Geeignet sind ferner Ester der Kohlensäure mit den genannten Diolen, insbesondere solchen mit 4 bis 6 Kohlenstoffatomen, wie Butandiol-1,4 und/oder Hexandiol-1,6, Kondensationsprodukte von a-Hydroxycarbonsäuren, beispielsweise a-Hydroxycapronsäure und vorzugsweise Polymerisationsprodukte von Lactonen, beispielsweise gegebenenfalls substituierten e-Caprolactonen.
   Als Polysterole vorzugsweise verwendet werden Alkandiol-polyadipate mit 2 bis 6 Kohlenstoffatomen im Alkylenrest, wie z.B. Ethandiol-polyadipate, 1,4-Butandiol-polyadipate, Ethandiol-butandiol-1,4-polyadipate, 1,6-Hexandiol-neopentylglykol-polyadipate, Polycaprolactone und insbesondere 1,6-Hexandiol-1,4-butandiol-polyadipate.
   Die Polysterole besitzen Molekulargewichte (Gewichtsmittel) von 500 bis 6.000, vorzugsweise 800 bis 3.500.
c) Als Kettenverlängerungsmittel (c) mit Molekulargewichten von 60 bis 400, vorzugsweise 60 bis 300, kommen vorzugsweise Alkandiole mit 2 bis 12 Kohlenstoffatomen, vorzugsweise mit 2,4 oder 6 Kohlenstoffatomen, wie z.B. Ethandiol, Hexandiol-1,6, und insbesondere Butandiol-1,4 und Dialkylenether-glykole, wie z.B. Diethylenglykohl und Dipropylenglykol in Betracht. Geeignet sind jedoch auch Diester der Terephthalsäure mit Alkandiolen mit 2 bis 4 Kohlenstoffatomen, wie z.B. Terephtalsäure-bis-ethandiol oder -butandiol-1,4, Hydroxyalkylenether des Hydrochinons, wie z.B. 1,4-Di-(β-hydroxyethyl)-hydrochinon.
   Als Kettenverlängerungsmittel finden vorzugsweise Verwendung Alkandiole mit 2 bis 6 C-Atomen im Alkylenrest, insbesondere Butandiol-1,4 und/oder Dialkylenglykole mit 4 bis 8 Kohlenstoffatomen.
   Zur Einstellung von Härte- und Schmelzpunkt der thermoplastischen Polyurethane können die Aufbaukomponenten (b) und (c) in relativ breiten molaren Verhältnissen variiert werden. Bewährt haben sich molare Verhältnisse von Polyhydroxylverbindungen (b) zu Kettenverlängerungsmitteln (c) von 1 : 1 bis 1 : 12, insbesondere von 1 : 1,8 bis 1 : 6,4, wobei die Härte und der Schmelzpunkt der thermoplastische Polyurethane mit zunehmendem Gehalt an Diolen ansteigt.
   Zur Herstellung der thermoplastischen Polyurethane werden die Aufbaukomponenten (a), (b) und (c) in Gegenwart von gegebenenfalls Katalysatoren (d), Hilfsmitteln und/oder Zusatzstoffen (e) in solchen Mengen zur Reaktion gebracht, daß das Äquivalenzverhältnis von NCO-Gruppen der Diisocyanate (a) zur Summe der Hydroxylgruppen oder Hydroxyl- und Aminogruppen der Komponenten (b) und (c) 1 : 0,85 bis 1,20, vorzugsweise 1 : 0,95 bis 1 : 1,05 und insbesondere 1 : 0,98 bis 1,02 beträgt.
d) Geeignete Katalysatoren, welche insbesondere die Reaktion zwischen den NCO-Gruppen der Diisocyanate (a) und den Hydroxylgruppen der Aufbaukomponenten (b) und (c) beschleunigen, sind nach dem Stand der Technik bekannte organische Metallverbindungen wie Titansäureester, Eisenverbindungen wie z.B. Eisen-(III)-acetylacetonat, Zinnverbindungen, z.B. Zinndiacetat, Zinndioctoat, Zinndilaurat oder die Zinndialkylsalze aliphatischer Carbonsäuren wie Dibutylzinndiacetat, Dibutzylzinndilaurat oder ähnliche. Die Katalysatoren werden üblicherweise in Mengen von 0,002 bis 0,1 Teilen pro 100 Teile Polyhydroxylverbindung (b) eingesetzt.
e) Neben Katalysatoren können den Aufbaukomponenten (a) bis (c) auch Hilfsmittel und/oder Zusatzstoffe (e) einverleibt werden. Genannt seien beispielsweise Gleitmittel, Inhibitoren, Stabilisatoren gegen Hydrolyse, Licht, Hitze oder Verfärbung, Farbstoffe, Pigmente, anorganische und/oder Füllstoffe, Verstärkungsmittel und Weichmacher.

Nähere Angaben über die oben genannten Hilfsmittel- und Zusatzstoffe sind der Fachliteratur, beispielsweise der Monographie von J.H.Saunders und K.C. Frisch "High Polymers", Band XVI, Polyurethane, Teil 1 und 2, Verlag Interscience Publishers 1962 bzw. 1996, dem vorgenannten Kunststoff-Handbuch, Band XII, Polyurethane oder der DE-OS 29 01 774 zu entnehmen.

Wie bereits dargelegt wurde, kann das thermoplastische Polyurethan vorzugsweise nach dem Bandverfahren hergestellt werden. Im einzelnen wird beim Bandverfahren auf folgende Weise verfahren:
Die Aufbaukomponenten (a) bis (c) und gegebenenfalls (d) und/oder (e) werden bei Temperaturen oberhalb des Schmelzpunktes der Aufbaukomponenten (a) bis (c) mit Hilfe eines Mischkopfes kontinuierlich gemischt. Die Reaktionsmischung wird auf einen Träger, vorzugsweise Förderband, aufgebracht und durch eine temperierte Zone geführt. Die Reaktionstemperatur in der temperierten Zone beträgt 60 bis 200° C, vorzugsweise 100 bis 180° C und die Verweilzeit 0,05 bis 0,5 Stunden, vorzugsweise 0,1 bis 0,3 Stunden. Nach beendeter Reaktion läßt man das thermoplastische Polyurethan abkühlen und zerkleinert oder granuliert es anschließend.
Beim Extruderverfahren werden die Aufbaukomponenten (a) bis (c) und gegebenenfalls (d) und (e) einzeln oder als Gemisch in den Extruder eingeführt, bei Temperaturen von 100 bis 250°C, vorzugsweise 140 bis 220°C zur Reaktion gebracht, das erhaltene thermoplastische Polyurethan wird extrudiert, abgekühlt und granuliert.
Vorzugsweise Anwendung finden thermoplastische Polyurethane mit einer Shore A-Härte von 70 bis Shore-D-Härte 80, vorzugsweise einer Shore-A-Härte von 80 bis Shore-D-Härte 74, insbesondere mit einer Shore-D-Härte von 45 bis 74 die hergestellt werden durch Umsetzung von Polyoxytetramethylenglykol oder insbesondere Alkandiolpolyadipaten mit 2 bis 6 C-Atomen im Alkylenrest, linearen aliphatischen und/oder cycloaliphatischen Diisocyanaten, z.B. Hexamethylendiisocyanat-1,6 oder 4,4-Dicyclohexylmethan-diisocyanat, und vorzugsweise aromatischen Diisocyanaten und/oder insbesondere 4,4'-Diphenylmethandiisocyanat und Butandiol-1,4 im Äquivalenzverhältnis von NCO- : OH-Gruppen von 1 : 0,95 bis 1,05.

Das thermoplastische Polyurethan ist erfindungsgemäß zur Stabilisierung gegen ultraviolette Strahlung mit Antioxidanzien, vorzugsweise sterisch gehinderten Phenolen versetzt. Um den Schutz gegen ultraviolette Strahlung noch zu verbessern, können spezielle UV-Filtersubstanzen in das thermoplastische Polyurethan eingemischt werden. Vorzugsweise werden hierfür Benztriazole verwendet.

Ferner können die thermoplastischen Urethane mit als Radikalfänger wirkenden Substanzen vermischt sein. Hierfür kommen insbesondere sterisch gehinderte Amine oder Epoxidverbindungen in Betracht.

Die Härte des erfindungsgemäß eingesetzten thermoplastischen Polyurethans hängt von dem Anwendungsbereich ab. Grundsätzlich liegt die Shore-A-Härte zwischen 80 und Shore-D-Härte 74. Für den Bereich der Beschichtung von Holz, insbesondere für im Innenbereich verwendeten Holzteile und Möbel kommen insbesondere Shore-D-Härte von 45 bis einer Shore-D-Härte von 75 in Betracht.

Für die Beschichtung des thermoplastischen Polyurethans mit Lack werden erfindungsgemäß vorzugsweise Überzugsmassen verwendet, die als Bindemittel durch ultraviolette Strahlung härtbare Mittel enthält. Solche Zubereitungen sind bekannt. Solche Bindemittel werden z.B. in der europäischen Patentanmeldung 0 586 849 A2 oder EP-A-0 231 442 oder DE-A-3706355 oder DE-A-3836370 beschrieben.

Erfindungsgemäß bevorzugt ist eine Überzugsmasse enthaltend 0 bis 80 Gew.-%, vorzugsweise 0 bis 60 Gew.-% Urethanacrylat, 5 bis 80 Gew.-%, vorzugsweise 15 bis 80 Gew.-% Polyetheracrylat, 0 bis 50 Gew.-%, vorzugsweise 5 bis 40 Gew.-% Reaktivverdünner, 1 bis 10 Gew.-%, vorzugsweise 3 bis 6 Gew.-% Photoinitiator, 0 bis 30 Gew.-% Pigmente und 0 bis 30 Gew.-% weitere lackübliche Füllstoffanteile.

Im folgenden werden die die einzelnen Bestandteile der strahlenhärtbaren Überzugsmasse im Detail beschrieben:

Die erfindungsgemäßen Urethanacrylate werden vorzugsweise aus 30 bis 45 Gew.-% Polyester, ganz besonders bevorzugt 30 bis 40 Gew.-%, 0,01 bis 0,1 Gew.-% Katalysatoren, 0,05 bis 0,1 Gew.-% Stabilisatoren, 10 bis 20, vorzugsweise 15 bis 20 Gew.-% Hydroxyethylacrylat, 15 bis 25, vorzugsweise 15 bis 20 Gew.-% Reaktivverdünner und 20 bis 35, vorzugsweise 25 bis 35 Gew.-% einer Diisocyanatkomponente hergestellt.

Die erfindungsgemäß eingesetzten Polyester bestehen aus 50 bis 75 Gew.-%, vorzugsweise 55 bis 65 Gew.-% Alkohol und 20 bis 50, vorzugsweise 30 bis 45 Gew.-% Säure sowie 5 Gew.-% üblichen Hilfsstoffen.

Die Herstellung der hydroxylgruppenhaltigen Polyesterharze erfolgt in bekannter Weise durch Veresterung von mehrwertigen Carbonsäuren mit mehrwertigen Alkoholen in Gegenwart geeigneter Katalysatoren. Anstelle der freien Säure können auch deren esterbildende Derivate eingesetzt werden. Für die Herstellung der Polyester geeignete Alkohole sind beispielsweise Ethylenglycol, Propylenglycol-1,2, Propylenglycol-1,3, Butandiol-1,2, Butandiol-1,3, Butandiol-1,4, Pentandiol-1,5, Neopentylglycol, Diethylenglycol, Triethylenglycol sowie Triole, wie z.B. Glycerin, Trimethylolethan, Trimethylolpropan und Tris-2-hydroxyethylisocyanurat.

Weiterhin sind cycloaliphatische Alkohole, wie Cyclohexanole und 1,4-Bis-(hydroxymethyl)-cyclohexan, aromatische Alkohole, wie 1,3-Xylylendiol sowie Phenole wie 2,2-Bis-(4-hydroxyphenyl)-propan (Bisphenol A) geeignet.

Bevorzugt eingesetzt werden Mischungen von Trimethylolpropan, Triethylenglycol, Cyclohexandimethanol.

Geeignet sind auch zweiwertige aliphatische Alkohole, wie Hexandiol-1,4, Hexandiol-1,6, 2-Methylpentandiol-1,5, 2-Ethylbutandiol-1,4, Dimethylolcyclohexan, dreiwertige Alkohole, wie Trimethylolbutan, vierwertige Alkohole, wie Pentaerythrit sowie höherwertige Alkohole, wie Di-(trimethylolpropan,Di-(pentaerythrit) und Sorbitol.

Geeignete Carbonsäuren sind beispielsweise Phtalsäure, Isophthalsäure, Terephthalsäure sowie deren veresterbare Derivate, wie z.B. die Anhydride, soweit sie existieren, und die niederen Alkylester der genannten Säuren, wie z.B. Methyl-, Ethyl-, Propyl-, Butyl-, Amyl-, Hexyl- und Octylphthalate, -terephthalate und -isophthalate. Einsetzbar sind sowohl die Halbester, die Dialkylester als auch Mischungen dieser Verbindungen. Einsetzbar sind auch die entsprechenden Säurehalogenide dieser Verbindungen.Bevorzugt werden Mischungen aus Phthalsäureanhydrid, Isophthalsäure und Adipinsäure.

Für die Herstellung geeignet sind aliphatische und/oder cycloaliphatische Diisocyanate, wie z.B. 1,3-Cyclopentan-, 1,4-Cyclohexan-, 1,2-Cyclohexandiisocyanat, 4,4'-Methylen-bis-(cyclohexylisocyanat) und Isophorondiisocyanat, Trimethylen-, Tetramethylen-, Pentamethylen-, Hexamethylen- und Trimethylhexamethylen-1,6-diisocyanat sowie die in der EP-A-204 161, Spalte 4, Zeilen 42 bis 49 beschriebenen, von Dimerfettsäuren abgeleiteten Diisocyanate.

Bevorzugt wird Isophorondiisocyanat an den hydroxyfunktionellen Polyester addiert.
Durch Addition von hydroxylgruppenhaltigen Acrylestern bzw. Methacrylestern, wie Hydroxyethylacrylat oder Hydroxybutylacrylat an isocyanatgruppenhaltige Mono- bzw. Oligomere werden die Polyurethanacrylate bzw. -methacrylate erhalten, die wie die Epoxy(meth)acrylate als Esterkomponente verwendet werden können.

Damit bei der Additionsreaktion keine unerwünschte Polymerisation stattfindet, werden dem Reaktionsgemisch im allgemeinen Polymerisationsinhibitoren als Stabilisatoren zugesetzt. Zu den geeigneten Polymerisationsinhibitoren gehören bekannte Produkte, wie substituierte Phenole, wie 2,6-Di-tert.-butyl-p-kresol, Hydrochinone, wie Methylhydrochinone, und Thioether, wie Thiodiglykol oder Phenothiazin.

Das erfindungsgemäß verwendete Polyetheracrylat besteht aus 50 bis 75 Gew.-%, vorzugsweise 55 bis 65 Gew.-% eines Polyetherpolyols, 20 bis 50 Gew.-%, vorzugsweise 30 bis 45 Gew.-% Acrylsäure und 5 Gew.-% üblichen Hilfsstoffen.

Vorzugsweise handelt es sich um Polyetherpolyole mit einer Schicht von 290 mg KOH/g, einem Molekulargewicht von 800 und einer Viskosität von 500 mPas.

Die hydroxylgruppenhaltigen Polyether, die mit Acrylsäure und/oder Methacrylsäure verestert werden, werden durch Umsetzung von zwei- und/oder mehrwertigen Alkoholen mit verschiedenen Mengen an Ethylenoxid und/oder Propylenoxid nach gut bekannten Methoden (vgl. z.B. Houben-Weyl, Band XIV, 2, Makromolekulare Stoffe II, (1963) erhalten. Die zum Einsatz gelangenden Etheralkohole weisen im allgemeinen einen Ethoxilierungsgrad von 10 bis 20, vorzugsweise 13 bis 17 auf.Vorzugsweise kommt ethoxyliertes Erythrit mit einem Molekulargewicht von 500 bis 1000, vorzugsweise 700 bis 900 zum Einsatz. Ein Beispiel ist Pentaerythrit verethert mit 15 Ethoxyeinheiten.

Erfindungsgemäß einsetzbar sind ferner Photoinitiatoren, die eine copolymerisierbare Doppelbindung (i.a. (Meth)acrylsäureester) enthalten und die durch Copolymerisation in das Polymere eingebaut werden.

Derartige Verbindungen sind bekannt. So sind besonders die aus der EP-OS 0 217 205 bekannten copolymerisationsfähigen Photoinitiatoren geeignet, desweiteren auch die aus der US-PS 3,429,852 bekannten Photoinitiatoren.

Der in den erfindungsgemäßen Überzugsmassen üblicherweise in einer Menge von 0 bis 10 Gew.-%, bevorzugt 3 bis 6 Gew.-%, bezogen auf das Gesamtgewicht des Überzugs, eingesetzte Photoinitiator variiert mit der zur Härtung der Beschichtungsmittel eingesetzten Strahlung (UV-Strahlung, Elektronenstrahlung, sichtbares Licht). Bevorzugt werden die erfindungsgemäßen Überzüge mittels UV-Strahlung gehärtet. In diesem Fall werden üblicherweise Photoinitiatoren auf Ketonbasis eingesetzt, beispielsweise Acetophenon, Benzophenon, Diethoxyacetophenon, 2-Hydroxy-2-methyl-1-phenylpropan-1-on, Hydroxypropylphenylketon, m-Chloroacetophenon, Propiophenon, Benzoin, Benzil, Benzildimethylketal, Anthrachinon, Thioxanthon und Thioxanthon-Derivate und Triphenylphosphin u.ä. sowie Mischungen verschiedener Photoinitiatoren.

Weiterhin sind die aus der EP-OS 0 209 831 bekannten Photoinitiatoren geeignet, sofern sie einen die Polymerisation regelnden Rest tragen.

Als Reaktivverdünner eignen sich alle oben angeführten bei Raumtemperatur flüssigen Monomere. Bei Raumtemperatur feste Monomere, die in den flüssigen Monomeren gelöst werden können, sollen in diesem Sinne auch als Reaktivverdünner gelten.

Bevorzugt ist jedoch die Verwendung von Reaktivverdünnern mit einem Siedepunkt von > 100 °C, besonders bevorzugt von > 125 °C. Besonders bevorzugt sind die aus der EP-PS 0 088 300 bekannten Reaktivverdünner, die für sich allein oder in jedem Verhältnis gemischt eingesetzt werden können.

Die strahlenhärtbaren Überzüge können als Reaktionsverdünner für den Einsatz in strahlenhärtbaren Überzügen bekannte copolymerisierbare Verbindungen enthalten z.B. Vinylcaprolactam, (Meth)-Acrylsäureester, insbesondere Methyl(meth)acrylat, Ethyl(meth)acrylat, Propyl(meth)acrylat, Butyl(meth)acrylat, Isopropyl(meth)acrylat, Pentyl(meth)acrylat, Isoamyl(meth)acrylat, Hexyl(meth)acrylat, Cyclohexyl(meth)acrylat, 2-Ethylhexyl(meth)acrylat, Octyl(meth)acrylat, 3,5,5-Trimethylhexyl(meth)acrylat, Decyl(meth)acrylat, Hexadecyl(meth)acrylat, Isobornylacrylat, Octadecyl(meth)acrylat, Octadecenyl(meth)acrylat, Phenoxyethylacrylat sowie die entsprechenden Ester der Malein-, Fumar-, Tetrahydrophthal-, Croton-, Isocroton-, Vinylessig- und Itaconsäure. Bevorzugt eingesetzt werden Monomere mit mehr als einer Doppelbindung pro Molekül, z.B. Ethylenglycoldiacrylat, Diethylenglycoldiacrylat, Propylenglycoldiacrylat, Tripopylenglycoldiacrylat, Neopentylglycoldiacrylat, 1,3-Butylenglycoldiacrylat, 1,4-Butylenglycoldiacrylat, 1,6-Hexamethylenglycoldiacrylat,1,10-Decamethylenglycoldiacrylat, Trimethylolpropantriacrylat, Pentaerythrittetraacrylat und Pentaerythrittriacrylat sowie die entsprechenden Methacrylate. In Betracht kommen auch die ethoxilierten oder propoxilierten Derivate sowie die in der EP-A-250 631 beschriebenen, langkettigen linearen Diacrylate mit einem Molekulargewicht von 400 bis 4000, bevorzugt von 600 bis 2500. Beispielsweise können die beiden Acrylatgruppen durch eine Polyoxybutylenstruktur getrennt sein. Einsetzbar sind außerdem 1,12-Dodecyldiacrylat und das Umsetzungsprodukt von 2 Molen Acrylsäure mit einem Mol eines Dimerfettalkohols, der im allgemeinen 36 C-Atome aufweist.

Durch den Zusatz ethylenisch ungesättigter Verbindungen werden die Viskosität und die Aushärtegeschwindigkeit des Überzugs sowie die mechanischen Eigenschaften der resultierenden Beschichtung gesteuert, wie dies dem Fachmann geläufig ist und beispielsweise in der EP-A-223 086 beschrieben ist und auf die wegen weiterer Einzelheiten verwiesen wird.

Außerdem können die Überzüge ggf. noch Pigmente und lackübliche Füllstoffe, übliche Hilfs- und Zusatzstoffe enthalten. Erstere werden in Mengen von 0 bis 30 Gew.-% eingesetzt. Der Anteil an lacküblichen Füllstoffen beträgt 0 bis 10 Gew.-%. Hilfs- und Zusatzstoffe werden üblicherweise in einer Menge von 0 bis 4 Gew.-%, bevorzugt 0,5 bis 2,0 Gew.-%, jeweils bezogen auf das Gesamtgewicht des Überzugs, eingesetzt. Beispiele für derartige Stoffe sind Verlaufsmittel, Weichmacher (z.B. Extender, wie Talkum, Schwerspat, Aluminiumsilikat, Dolomit, Entschäumer und filmbildende Hilfsmittel, z.B. Cellulose-Derivate, Mattierungsmittel in üblichen Mengen) sowie insbesondere Haftvermittler.

Die unter Verwendung der erfindungsgemäßen Bindemittelgemische hergestellten Beschichtungsmittel können nach allen beliebigen Methoden der Lacktechnologie wie z.B. Gießern oder Walzen auf die beschriebenen Polyurethanfolien aufgebracht werden.

Dabei können die Mittel mittels üblicher Auftragsaggregate ggf. bei höherer Temperatur im allgemeinen im Bereich von 20 bis 100 °C, bevorzugt bei 20 bis 60 °C, aufgetragen werden.

Die beschichteten Substrate werden anschließend durch Bestrahlen mit ultraviolettem Licht vernetzt, wobei man Überzüge erhält, die eine hohe Kohäsion und eine sehr gute Schälfestigkeit bei vorzüglicher Alterungsbeständigkeit aufweisen. Die vernetzten wasserfesten Überzüge zeigen bei Wasserlagerung kein Weißanlaufen.

Die Bestrahlung der beschichteten Substrate kann in an sich überlicher Weise mit dem Licht von UV-Strahlern, z.B. Quecksilbernieder-, Quecksilbermitteldruck und Quecksilberhochdruckstrahlern unterschiedlicher Leistung z.B. von 80 W/cm, 100 W/cm oder 120 W/cm erfolgen; die Auswahl der Strahlers richtet sich u.a. nach den Absorptionsspektren der eingesetzten Pigmente.

Lampen mit einer höheren Leistung ermöglichen im allgemeinen eine schnellere Vernetzung. Je nach der Geschwindigkeit mit der das beschichtete Substrat die UV-Anlage durchläuft, arbeiten ein, zwei oder mehrere Lampen in einer Anlage.

Die erhaltenen Folien können auf verschiedene Substrate, insbesondere Holz oder Möbel bzw. Möbelteile aufgetragen werden.

Die Verbindung kann mit Hilfe herkömmlicher Haftvermittler erfolgen. Es ist jedoch hervorzuheben, daß die Haftung harter Thermoplaste auf den erfindungsgemäßen thermoplastischen Polyurethanen, insbesondere auf den weichen thermoplastischen Polyurethanen hervorragend ist. Aus diesem Grunde kann erfindungsgemäß mit einer Kombination thermoplastischer Polyurethane niedrigerer und höherer Härte gearbeitet werden. Die weicheren Polyurethane mit Reaktivierungstemperatur unter 150 °C dienen als Haftvermittlerschicht, während die harten Polyurethane eine gute Festigkeit und Verschleißfestigkeit garantieren.

Die Haftvermittler können auch sowohl Copolymere, Terpolymere, Pfropfcopolymere als auch Ionomere sein, mit der Maßgabe, daß sie Carboxyl- oder Anhydridgruppen oder Gruppen, die zu Carboxylgruppen hydrolysierbar sind, aufweisen und daß der Schmelzindex der Polymeren gemessen bei 190°C und einer Belastung von 2,16kg zwischen 0,1 und 30 g/10 min, bevorzugt zwischen 0,2 und 25 g/10 min und besonders bevorzugt zwischen 0,5 und 20 g/10 min liegt.

Geeignete Co- bzw. Terpolymere sind herstellbar durch Copolymerisation von Ethylen und alpha, β-ungesättigten Carbonsäuren wie z.B. Acrylsäure, Methacrylsäure, Itaconsäure, Crotonsäure, Isocrotonsäure, Maleinsäure und Fumarsäure, den entsprechenden Anhydriden oder den entsprechenden Estern oder Halbestern mit 1 bis 8 C-Atomen im Alkoholrest wie z.B. Methyl-, Ethyl-, Propyl-, Butyl-, Pentyl-, Hexyl-, Cyclohexyl-, Heptyl-, Octyl- und 2-Ethylhexylester der aufgeführten Säuren. Ebenfalls einsetzbar sind auch die entsprechenden Salze der aufgeführten Carbonsäuren, etwa die Natrium-, Kalium-, Lithium-, Magnesium-, Calcium, Zink- und Ammoniumsalze. Bevorzugt eingesetzt werden die Carbonsäuren und ihre Anhydride.

Weiterhin können bei der Copolymerisation noch weitere, mit Ethylen und den ungesättigten Carbonylverbindungen copolymerisierbare Monomere eingesetzt werden. Geeignet sind beispielsweise Alphaolefine mit 3 bis 10 C-Atomen, Vinylacetat und Vinylpropionat.

Die Mengen der eingesetzten Monomeren werden dabei so gewählt, daß das entsprechende Polymer einen Carboxylgruppengehalt von 0,1 bis 30 Gew.-%, bevorzugt 2 bis 20 Gew.-%, aufweist und daß der Gehalt an Ethyleneinheiten im Polymer bis zu 99,9 Gew.-%, bevorzugt zwischen 75 und 95 Gew.-%, beträgt.
Geeignete Pfropfcopolymere sind herstellbar durch Pfropfung von mindestnes einem Polymeren aus der Gruppe der Polyolefine mit bis 10 Gew.-%, bevorzugt bis zu 5 Gew.-%, bezogen auf das Gesamtgewicht der Monomeren, mindestens eines Monomeren aus der Gruppe der alpha, β-ungesättigten Carbonsäuren, deren Anhydride, deren Estern oder Salzen in Gegenwart oder Abwesenheit von Peroxiden. Beispiele von geeigneten Polyolefinen sind die bereits bei der Beschreibung der Deckschichten dieser Beschreibung aufgeführten Polyolefine. Beispiele für geeignete Carbonylverbindungen sind die oben bei der Beschreibung der Haftvermittler auf Copolymerbasis aufgeführten Carbonylverbindungen.

Die als Haftvermittlerschicht eingesetzten Ionomeren sind herstellbar durch die bereits oben beschriebene Copolymerisation von Ethylen und ggf. weiteren Monomeren mit Salzen ∝, β-ungesättigten Carbonsäuren oder durch partielle Neutralisation von den bereits oben beschriebenen carbonsäurehaltigen Co-, Ter- und Pfropfpolymeren mit Salzen, Oxiden und Hydroxiden von Natrium, Kalium, Lithium, Magnesium, Calcium, Zink und Ammonium. Die Neutralisation kann in der Schmelze oder in der Lösung durchgeführt werden. Die Menge an basischer Verbindung wird dabei so gewählt, daß der Neutralisationsgrad des Polymers zwischen 0,1 und 99 %, bevorzugt zwischen 0,1 und 75 % und ganz besonders bevorzugt zwischen 0,1 und 40 % liegt.

Es kommen auch Haftvermittler auf Polyurethanbasis in Frage.

Die Haftvermittlerschicht kann noch übliche Additive wie z.B. innere und äußere Gleitmittel, Antiblockmittel, Stabilisatoren, Antioxidantien, Pigmente, Kristallisationshilfsmittel und dergleichen enthalten. Diese Additive werden in den für die Herstellung, Verarbeitung, Konfektionierung und Anwendung notwendigen Mengen in Form von Pulver, Puder, Perlen oder einem direkt in dem entsprechenden Polymer eingearbeiteten Konzentrat eingesetzt. Näliere Angaben zu den üblicherweise eingesetzten Mengen und Beispiele für geeignete Additive sind beispielsweise Gächter-Müller, Kunststoffadditive, Carl-Hanser Verlag zu entnehmen. Bevorzugt werden diese Additive in die thermoplastische Kunststoffschicht eingearbeitet.

Die ggf. für die Holzbeschichtung verwendeten Klebstoffe werden vorzugsweise durch Auftragen aus Lösungen oder Dispersionen in Wasser oder organischen Lösungsmitteln aufgebracht. Die Lösungen oder die Dispersionen haben in der Regel einen Klebstoffgehalt von etwa 5 bis 60 Gew.-%. Die aufgebrachte Klebstoffmenge beträgt in der Regel etwa 1 bis 30 g/m² Fläche. Besonders geeignete Klebstoffe sind die synthetischen Klebstoffe, bestehend aus thermoplastischen Harzen wie Celluloseester, Celluloseether, Alkyl- oder Acrylester, Polyamide, Polyurethane, Polyester und Polystyrol, aus wärmehärtenden Harzen wie Epoxyharzen, Harnstoff/Formaldehydharzen, Phenol/Formaldehydharzen und Melamin-Formaldehydharzen oder aus synthetischen Kautschuken.

Zusätzlich zu den genannten Beschichtungen können erfindungsgemäß auch Pigmentierungen vorgenommen werden.

Mit dem erfindungsgemäßen Foliensystem ist eine Beschichtung von Holz und Möbeln vor Ort durchführbar. Es ist nicht mehr erforderlich, die einzelnen Schichten auf das Holz aufzutragen. Die entstandene Lackfolie zeigt nicht nur einen guten Verbund (Haftung), sondern auch ausgezeichnete Kaschierfähigkeit. Verblüffend ist, daß die Lackfolie trotz des mit UV-Licht gehärteten Lackes noch eine hohe Elastizität (Tiefziehfähigkeit) zeigt. Damit läßt sich die erfindungsgemäße Lackfolie als Ersatz für die bisherigen PVC-Folien verwenden. Ebenso ist sie ein Ersatz für alle anderen bisher üblichen Beschichtungssysteme in der Holzindustrie.

Im folgenden wird die Erfindung unter Bezugnahme auf die Beispiele näher beschrieben:

### Beispiele:

### Folie 1:

Polyether-Polyurethan-Folie (Elastollan 1154D-Basis)
transparent
Shore-D-Härte = 53-54; Dichte = 1,17;Reißdehnung = 400%

### Folie 2:

Polyester-Polyurethan-Folie (Elastollan SP883-Basis)
schwarz
Shore-A-Härte = 85-87; Dichte = 1,19;Reißdehnung = 550%

### Beispiel 1:

### Polyetheracrylat; UV-härtbare Beschichtung; lösemittelfrei; transparent

| | |
|---|---|
| 79,0 % Polyetheracrylat¹ | (Laromer PO84F) |
| 3,2 % Photoinitiator | (Benzophenon) |
| 0,6 % Verlaufsmittel | (Emulsion 4104) |
| 6,2 % Mattierungsmittel | (pyr. Kieselsäure) |
| 11,0% Füllstoff | (Talkum micro) |

| | |
|---|---|
| ¹⁾ Aminmodifizierte Type wie in DE 3706355 beschrieben | |

Dichte = 1,18; Auslaufzeit = 90 sec. im 6 mm Becher

### Beispiel 2:

### Polyetheracrylat; UV-härtbare Beschichtung; lösemittelfrei; transparent

| | |
|---|---|
| 73,0 % Polyetheracrylat²⁾ | (Parotal VP29423) |
| 4,0 % Photoinitiator | (Benzophenon) |
| 0,5 % Verlaufsmittel | (Byk 306) |
| 2,0 % Mattierungsmittel | (pyr. Kieselsäure) |
| 1,0 % Wachs | (Lanco-Wax) |
| 19,5 % Füllstoff | (Talkum, Kreide) |

| | |
|---|---|
| ²⁾ Aminmodifizierte Type wie in EP 636153 beschrieben | |

Dichte = 1,20; Auslaufzeit = 45 sec. im 6 mm Becher
Beschichtungstechnik: Walzen oder Rakeln
Schichtdicke: ca. 5-7 µm
UV-Bestrahlungsintensität: ca. 200 mJ/cm² (Lightbag390)
Lampentyp: standard

### Beispiel 3:

| | |
|---|---|
| 50,0 % Urethanacrylat | (Ebecryl 284) |
| 15,0 % Polyetheracrylat²⁾ | (Laromer PO83F) |
| 10,0 % Reaktivverdünner | (NPGDA) |
| 3,5 % Photoinitiator | (Benzophenon) |
| 0,5 % Verlaufsmittel | (Byk 306) |
| 2,0 % Mattierungsmittel | (pyr. Kieselsäure) |
| 1,0 % Wachs | (Lanco-Wax) |
| 18,0 % Füllstoff | (Talkum, Kreide) |

Dichte: 1.20, Auslaufzeit = 90 sec. in 6 mm Düse

### Beispiel 4:

| | |
|---|---|
| 45,0 % Urethanacrylat | (Ebecryl 230) |
| 20,0 % Polyetheracrylat³⁾ | (Sartomer 494) |
| 15,0 % Reaktivverdünner | (NPGDA, IBOA) |
| 3,5 % Photoinitiator | (Benzophenon) |
| 0,5 % Verlaufsmittel | (Byk 306) |
| 2,0 % Mattierungsmittel | (pyr. Kieselsäure) |
| 1,0 % Wachs | (Lanco-Wax) |
| 13,0 % Füllstoff | (Talkum, Kreide) |

| | |
|---|---|
| 3) nicht Amin modifizierte Type | |

Dichte: 1.20, Auslaufzeit = 90 sec. in 6 mm Düse

## Patentansprüche

1. Folie bestehend aus wenigstens zwei Schichten, insbesondere zur Beschichtung von Holz,
**dadurch gekennzeichnet, daß** sie
(1) wenigstens eine Folie aus Polyurethan mit einer Shore-A-Härte von 70 bis Shore-D-Härte von 80, vorzugsweise Shore-A-Härte von 80 bis Shore-D-Härte von 74, insbesondere mit einer Shore-D-Härte von 45 bis 74 enthält, und
(2) wenigstens einer darauf aufgebrachten Schicht aus mittels ultravioletter Strahlung gehärtetem Lack enthält.

2. Folie nach Anspruch 1,
**dadurch gekennzeichnet, daß** das Polyurethan zur Stabilisierung gegen ultraviolette Strahlung Antioxidanzien, vorzugsweise sterisch gehinderte Phenole, enthält.

3. Folie nach Anspruch 1 oder 2,
**dadurch gekennzeichnet, daß** das Polyurethan als Radikalfänger wirkende Verbindungen, vorzugsweise Amine oder Epoxide, enthält.

4. Folie nach Anspruch 1 bis 3,
**dadurch gekennzeichnet, daß** das Polyurethan als Filter gegen ultraviolette Strahlung wirkende Verbindungen, vorzugsweise Benztriazol, enthält.

5. Folie nach Anspruch 1 bis 4,
**dadurch gekennzeichnet, daß** die Schicht (2) aus einer Überzugsmasse enthaltend 0 bis 80 Gew.-%, vorzugsweise 0 bis 60 Gew.-% Urethanacrylat, 5 bis 80 Gew.-%, vorzugsweise 15 bis 80 Gew.-% Polyetheracrylat, 0 bis 50 Gew.-%, vorzugsweise 5 bis 40 Gew.-% Reaktiwerdünner, 1 bis 10 Gew.-%, vorzugsweise 3 bis 6 Gew.-% Photoinitiator, 0 bis 30 Gew.-% Pigmente und 0 bis 30 Gew.-% weitere lackübliche Füllstoffe besteht.

6. Folie nach Anspruch 5,
**dadurch gekennzeichnet, daß** der Reaktivverdünner Vinylcaprolactam, Tripropylenglycoldiacrylat, Hexandioldiacrylat oder Isobornylacrylat und/oder Trimethylolpropantriacrylat, Pentaerythrittetraacrylat oder ethoxilierte propoxilierte Derivate enthält.

7. Folie nach Anspruch 5 oder 6,
**dadurch gekennzeichnet, daß** das Urethanacrylat aus 30 bis 45 Gew.-%, vorzugsweise 30 bis 40 Gew.-% Polyester, 0,01 bis 0,1 Gew.-% Katalysator, 0,05 bis 0,1 Gew.-% Stabilisator, 10 bis 20 Gew.-%, vorzugsweise 15 bis 20 Gew.-% Hydroxyethylacrylat, 15 bis 20 Gew.-%, vorzugsweise 15 bis 20 Gew.-% Reaktivverdünner und 20 bis 35 Gew.-%, vorzugsweise 25 bis 35 Gew.-% einer Diisocyanatkomponente hergestellt wird.

8. Folie nach Anspruch 7,
**dadurch gekennzeichnet, daß** der Polyester aus 50 bis 75 Gew.-%, vorzugsweise 55 bis 65 Gew.-% Alkohol und 20 bis 50, vorzugsweise bis 30 bis 45 Gew.-% Säure sowie 5 Gew.-% üblichen Hilfsstoffen besteht.

9. Folie nach einem der Ansprüche 5 bis 8,
**dadurch gekennzeichnet, daß** das Polyetheracrylat aus 50 bis 75 Gew.-%, vorzugsweise 55 bis 65 Gew.-%, eines Polyetherpolyols, 20 bis 50 Gew.-%, vorzugsweise 30 bis 45 Gew.-% Acrylsäure und 5 Gew.-% üblichen Hilfsstoffen besteht.

10. Folie nach Anspruch 9,
**dadurch gekennzeichnet, daß** das Polyetherpolyol aus einem ethoxyliertem Erythrit mit einem Molekulargewicht von 500 bis 1000, vorzugsweise 700 bis 900 besteht.

11. Folie nach einem der Ansprüche 1 bis 10,
**dadurch gekennzeichnet, daß** sie 0 bis 10 Gew.-%, vorzugsweise 2 bis 5 Gew.-% eines carboxyfunktionellen (Meth)acrylesters zusätzlich als Haftvermittler enthält.

12. Verfahren zur Herstellung der Folien nach Anspruch 1 bis 11,
**dadurch gekennzeichnet,daß**
(a) die Lackschicht (2) mittels üblicher Auftragsaggregate ggf. bei erhöhter Temperatur, vorzugsweise bei 20 bis 150 ° C in an sich üblicher Weise, vorzugsweise durch Streichen, Spritzen, Walzen, Rakeln, Gießen auf die Folie (1) aufgebracht und
(b) der Lack-Folien-Verbund durch Bestrahlen mit ultraviolettem Licht vernetzt wird.

13. Verwendung der Folie nach Anspruch 1 bis 11 zur Beschichtung von Holz, Haushaltsgeräten, Möbeln und Möbelteilen.

## Claims

1. A film consisting of at least two layers, in particular for coating wood,
which comprises
(1) at least one film of polyurethane having a Shore A hardness of 70 to a Shore D hardness of 80, preferably a Shore A hardness of 80 to a Shore D hardness of 74 and, in particular, having a Shore D hardness of from 45 to 74, and
(2) at least one layer, applied thereto, of coating material which is cured by means of ultraviolet radiation.

2. A film as claimed in claim 1,
**wherein** the polyurethane for the purpose of stabilization against ultraviolet radiation comprises antioxidants, preferably sterically hindered phenols.

3. A film as claimed in claim 1 or 2,
**wherein** the polyurethane comprises compounds which act as free-radical scavengers, preferably amines or epoxides.

4. A film as claimed in claim 1 to 3,
**wherein** the polyurethane comprises compounds which act as filters against ultraviolet radiation, preferably benzotriazole.

5. A film as claimed in claim 1 to 4,
**wherein** the layer (2) consists of a coating composition containing from 0 to 80% by weight, preferably from 0 to 60% by weight, of urethane acrylate, from 5 to 80% by weight, preferably from 15 to 80% by weight, of polyether acrylate, from 0 to 50% by weight, preferably from 5 to 40% by weight, of reactive diluent, from 1 to 10% by weight, preferably from 3 to 6% by weight, of photoinitiator, from 0 to 30% by weight of pigments and from 0 to 30% by weight of further customary coatings fillers.

6. A film as claimed in claim 5,
**wherein** the reactive diluent comprises vinylcaprolactam, tripropylene glycol diacrylate, hexanediol diacrylate or isobornyl acrylate and/or trimethylolpropane triacrylate, pentaerythritol tetraacrylate or ethoxylated [lacuna] propoxylated derivatives.

7. A film as claimed in claim 5 or 6,
**wherein** the urethane acrylate consists of from 30 to 45% by weight, preferably from 30 to 40% by weight, of polyester, from 0.01 to 0.1% by weight of catalyst, from 0.05 to 0.1% by weight of stabilizer, from 10 to 20% by weight, preferably from 15 to 20% by weight, of hydroxyethyl acrylate, from 15 to 20% by weight, preferably from 15 to 20% [sic] by weight, of reactive diluent and from 20 to 35% by weight, preferably from 25 to 35% by weight, of a diisocyanate component.

8. A film as claimed in claim 7,
**wherein** the polyester consists of from 50 to 75% by weight, preferably from 55 to 65% by weight, of alcohol and from 20 to 50, preferably up to from 30 to 45% by weight of acid and also 5% by weight of customary auxiliaries.

9. A film as claimed in one of claims 5 to 8,
**wherein** the polyether acrylate consists of from 50 to 75% by weight, preferably from 55 to 65% by weight, of a polyetherpolyol, from 20 to 50% by weight, preferably from 30 to 45% by weight, of acrylic acid, and 5% by weight of customary auxiliaries.

10. A film as claimed in claim 9,
**wherein** the polyetherpolyol consists of an ethoxylated erythritol having a molecular weight of from 500 to 1000, preferably from 700 to 900.

11. A film as claimed in one of claims 1 to 10,
**which comprises** from 0 to 10% by weight, preferably from 2 to 5% by weight, of a carboxy-functional (meth)acrylic ester in addition as adhesion promoter.

12. A process for preparing a film as claimed in claims 1 to 11,
**which comprises**
(a) applying the coating layer (2) by means of customary applicator equipment, if desired at elevated temperature, preferably from 20 to 150°C, in a conventional manner, preferably by brushing, spraying, rolling, knife coating or curtain coating, to the film (1), and
(b) crosslinking the coating/film assembly by irradiation with ultraviolet light.

13. The use of a film as claimed in claims 1 to 11 for coating wood, domestic appliances, furniture or parts of furniture.

## Revendications

1. Pellicule constituée d'au moins deux couches, en particulier pour le revêtement du bois, **caractérisée en ce qu'**elle contient
(1) au moins une pellicule de polyuréthanne ayant une dureté Shore A de 70 à une dureté Shore D de 80, de préférence une dureté Shore A de 80 à une dureté Shore D de 74, en particulier ayant une dureté Shore D de 45 à 74, et
(2) au moins une couche d'un vernis durci par rayonnement ultraviolet, appliquée sur celle-ci,

2. Pellicule selon la revendication 1, **caractérisée en ce que** le polyuréthanne contient pour la stabilisation vis-à-vis du rayonnement ultraviolet des antioxydants, de préférence des phénols à empêchement stérique.

3. Pellicule selon la revendication 1 ou 2 **caractérisée en ce que** le polyuréthanne contient des composés agissant en tant que capteurs de radicaux, de préférence des amines ou des époxides.

4. Pellicule selon l'une quelconque des revendications 1 à 3, **caractérisée en ce que** le polyuréthanne contient des composés agissant en tant que filtre contre le rayonnement ultraviolet, de préférence du benzotriazole.

5. Pellicule selon l'une quelconque des revendications 1 à 4, **caractérisée en ce que** la couche (2) est constituée d'une matière de revêtement contenant de 0 à 80 % en poids, de préférence de 0 à 60 % en poids, d'uréthanne-acrylate, de 5 à 80 % en poids, de préférence de 15 à 80 % en poids, de polyéther-acrylate, de 0 à 50 % en poids, de préférence de 5 à 40 % en poids, d'un diluant réactif, de 1 à 10 % en poids, de préférence de 3 à 6 % en poids, d'un photoamorceur, de 0 à 30 % en poids de pigment et de 0 à 30 % en poids d'autres charges usuelles dans des vernis.

6. Pellicule selon la revendication 5, **caractérisée en ce que** le diluant réactif contient du vinylcaprolactame, du diacrylate de dipropylèneglycol, du diacrylate d'hexanediol, ou de l'acrylate d'isobornyle et/ou du triacrylate de triméthylolpropane, du tétra-acrylate de pentaérythritol ou des dérivés éthoxylés ou propoxylés.

7. Pellicule selon la revendication 5 ou 6, **caractérisée en ce que** l'uréthanne-acrylate est préparé à partir de 30 à 45 % en poids, de préférence, de 30 à 40 % en poids de polyester, de 0,01 à 0,1 % en poids de catalyseur, de 0,05 à 0,1 % en poids de stabilisant, de 10 à 20 % en poids, de préférence, de 15 à 20 % en poids d'acrylate d'hydroxyéthyle, de 15 à 20 % en poids, de préférence de 15 à 20 % en poids, d'un diluant réactif, et de 20 à 35 % en poids, de préférence de 25 à 35 % en poids, d'un composant diisocyanate.

8. Pellicule selon la revendication 7, **caractérisée en ce que** le polyester est constitué de 50 à 75 parties en poids, de préférence, de 55 à 65 parties en poids, d'alcool et de 20 à 50, de préférence, jusqu'à 30 à 45 % en poids, d'acide, ainsi que de 5 % en poids d'adjuvants usuels,

9. Pellicule selon l'une quelconque des revendications 5 à 8, **caractérisée en ce que** le polyéther-acrylate est constitué de 50 à 75 % en poids, de préférence de 55 à 65.% en poids, d'un polyétherpolyol, de 20 à 50 % en poids, de préférence, de 30 à 45 % en poids, d'acide acrylique, et de 5 % en poids d'adjuvants usuels.

10. Pellicule selon la revendication 9, **caractérisée en ce que** le polyétherpolyol est constitué d'un érythritol éthoxylé ayant une masse moléculaire de 500 à 1 000, de préférence de 700 à 900.

11. Pellicule selon l'une quelconque des revendications 1 à 10, **caractérisée en ce qu'**elle contient additionnellement en tant que promoteur d'adhérence de 0 à 10 % en poids, de préférence de 2 à 5 % en poids, d'un ester (méth)acrylique à fonction carboxy.

12. Procédé pour la fabrication des pellicules selon l'une quelconque des revendications 1 à 11, **caractérisé en ce que**
(a) on applique sur la pellicule (1) la couche de vernis (2), au moyen d'appareils d'application usuelle, et éventuellement à haute température, de préférence à 20-150°C, d'une façon usuelle en soi, de préférence par enduction au pinceau, pistolage, enduction au rouleau, à la racle, vernissage au rideau, et
(b) le composite pellicule-vernis est réticulé par irradiation avec de la lumière ultraviolette.

13. Utilisation de la pellicule selon l'une quelconque des revendications 1 à 11, pour le revêtement du bois, d'appareils domestiques, de meubles, et de pièces de meubles.
